(19) Europäisches Patentamt
European Patent Office
Office européen des brevets

(11) EP 4 796 509 A1

(12) **EUROPEAN PATENT APPLICATION**
published in accordance with Art. 153(4) EPC

(43) Date of publication:
**26.08.2026 Bulletin 2026/35**

(21) Application number: **24879598.1**

(22) Date of filing: **07.10.2024**

(51) International Patent Classification (IPC):
***C04B 14/38*** (2006.01) ***C04B 28/02*** (2006.01)
***D06M 11/44*** (2006.01) ***D06M 11/45*** (2006.01)
***D06M 11/74*** (2006.01) ***D06M 15/263*** (2006.01)
***D06M 15/333*** (2006.01) ***D06M 15/693*** (2006.01)
***D06M 101/40*** (2006.01)

(52) Cooperative Patent Classification (CPC):
**C04B 14/38; C04B 28/02; D06M 11/44; D06M 11/45; D06M 11/74; D06M 15/263; D06M 15/333; D06M 15/693;** D06M 2101/40

(86) International application number:
**PCT/JP2024/035718**

(87) International publication number:
**WO 2025/084173 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 JP 2023179952**

(71) Applicant: **TEIJIN LIMITED**
**Kita-ku,**
**Osaka-shi,**
**Osaka 530-0005 (JP)**

(72) Inventors:
- **SHIRAKI, Koji**
  **Osaka-shi Osaka 530-0005 (JP)**
- **KURITA, Mako**
  **Osaka-shi Osaka 530-0005 (JP)**

(74) Representative: **Gulde & Partner**
**Patent- und Rechtsanwaltskanzlei mbB**
**Berliner Freiheit 2**
**10785 Berlin (DE)**

# (54) REINFORCING MATERIAL FOR HYDRATED AND SOLIDIFIED BODIES, AND HYDRATED AND SOLIDIFIED BODY

(57) Using a reinforcing material for a hydrated solidified body containing bundles of carbon fiber filaments oriented in one direction which is characterized in that the bundles contain carbon fiber filaments and amorphous carbon which binds the carbon fiber filaments to each other, that the amorphous carbon accounts for 5 to 30% by weight of the total weight of the carbon fiber filaments and the amorphous carbon, that the bundles have an average length in the axial direction of the carbon fiber filaments of 5 to 100 mm, and that the number of the carbon fiber filaments constituting the bundle is 1000 or more, a reinforcing material for a hydrated solidified body which has excellent adhesiveness to a hydrated solidified body and has high flexural strength even though recycled carbon fibers are used as a raw material is provided.



Processed by Luminess, 75001 PARIS (FR)

## Description

### Technical Field

The present invention relates to a reinforcing material for a hydrated solidified body used for reinforcing a hydrated solidified body and to a hydrated solidified body obtained by kneading and solidifying the reinforcing material and cement, mortar, concrete, or slag.

### Background Art

Since carbon fibers have excellent specific strength and excellent specific modulus and are light, carbon fibers are used as reinforcing fibers in various matrixes such as thermosetting resins and thermoplastic resins, and carbon fiber reinforced resin composite materials are used in a wide range of fields such as aerospace applications, automobile applications, sports applications, and general industrial applications.

In consideration of sustainable society, whether carbon fibers are continuously used in various applications depends on how to promote material recycling.

In the related art, a method for producing recycled carbon fibers from waste materials such as scrap which generates in a manufacturing process of carbon fiber reinforced plastic (hereinafter, may be referred to as "CFRP"), CFRP waste materials after the product life, or the like is known. Methods for producing recycled carbon fibers from CFRP include a method of thermally decomposing the matrix resin, a method of decomposing with a strong acid or a strong alkali such as sulfuric acid, a method of dissolving in an organic solvent, a supercritical/subcritical fluid, or the like, and other methods. Of the methods, a method of thermally decomposing the matrix resin is the mainstream because mass production is possible at low cost.

PTL 1 discloses a carbon fiber cluster in which a large number of carbon short fibers are integrally bonded with a thermal decomposition product of a thermosetting resin and which has a scaly shape as a whole. PTL 1 discloses a method for producing a carbon fiber cluster including subjecting a carbon fiber reinforced plastic to dry distillation in a temperature range of 300 to 1000°C substantially in a non-oxidizing atmosphere and then crushing into flakes.

PTL 2 discloses that a carbon fiber reinforced plastic is subjected to dry distillation to form a carbide of the plastic and that the carbide is then oxidatively decomposed to recover carbon fibers by heating at an oxygen concentration of 0.1 to 25% by volume and at a temperature of 300 to 1000°C without burning.

During the production of recycled carbon fibers from CFRP by a thermal decomposition method, when dry distillation is performed in a temperature range of 300 to 1000°C substantially in a non-oxidizing atmosphere, the matrix resin is carbonized to become amorphous carbon and remains adhered to the carbon fibers. The amount of the amorphous carbon depends on the type of the matrix resin and the proportion of the resin contained in the carbon fiber reinforced plastic, but the amount is generally 5 to 30% by weight based on the total weight of the recycled carbon fibers and the amorphous carbon adhered thereto.

Recycled carbon fibers are often cut into a length of 20 mm or less and melt-kneaded with a thermoplastic resin to be used as compound pellets for injection molding or cut into a length of 50 to 100 mm to be used for a nonwoven fabric.

In the recycled carbon fibers regenerated by the thermal decomposition method, amorphous carbon derived from the matrix resin is adhered to the carbon fibers, and the amount of the amorphous carbon is generally 5 to 30% by weight based on the total weight of the recycled carbon fibers and the amorphous carbon adhered thereto.

When recycled carbon fibers having a large proportion of amorphous carbon are used as compound pellets for injection molding, a large amount of amorphous carbon is introduced into the compound pellets, and the net amount of the carbon fibers is reduced, which may impair the mechanical properties.

When a certain amount or more of amorphous carbon is adhered during the production of a nonwoven fabric, the recycled carbon fibers do not spread, and the quality of the obtained nonwoven fabric becomes low. Therefore, the amorphous carbon content is also reduced.

As an approach to reduce the amorphous carbon in the recycled carbon fibers, there is a method of subjecting CFRP to dry distillation to convert the matrix resin into a carbide and then further heating under the conditions of an oxygen concentration of 0.1 to 25% by volume and a temperature of 300 to 1000°C to oxidatively decompose the amorphous carbon. However, since the oxidative decomposition takes time, the resulting recycled carbon fibers become expensive.

PTL 3 discloses a reinforcing material for concrete using a carbon/carbon fiber composite as a reinforcing material. The carbon of the carbon/carbon fiber composite is graphite and is different from amorphous carbon.

Patent Literature 1: JPH07-118440A
Patent Literature 2: JPH07-033904A
Patent Literature 3: JP2008-222516A

## Summary of Invention

### Technical Problem

An object of the present invention is to provide a reinforcing material for a hydrated solidified body having excellent adhesiveness to a hydrated solidified body and high flexural strength using recycled carbon fibers as a raw material. Another object is to provide a hydrated solidified body having high flexural strength.

### Solution to Problem

That is, the present invention is a reinforcing material for a hydrated solidified body containing bundles of carbon fiber filaments oriented in one direction which is characterized in that the bundles contain carbon fiber filaments and amorphous carbon which binds the carbon fiber filaments to each other, that the amorphous carbon accounts for 5 to 30% by weight of the total weight of the carbon fiber filaments and the amorphous carbon, that the bundles have an average length in the axial direction of the carbon fiber filaments of 5 to 100 mm, and that the number of the carbon fiber filaments constituting the bundle is 1000 or more.

### Advantageous Effects of Invention

According to the present invention, a reinforcing material for a hydrated solidified body having excellent adhesiveness to a hydrated solidified body and high flexural strength can be provided using recycled carbon fibers as a raw material. Furthermore, a hydrated solidified body having high flexural strength can be provided.

## Description of Embodiments

The reinforcing material for a hydrated solidified body of the present invention is obtained through thermal decomposition treatment using CFRP containing carbon fibers and a resin or a prepreg thereof as a raw material.
Hereinafter, the present invention will be explained in detail.

### [Bundles of Carbon Fiber Filaments]

The number of the carbon fiber filaments constituting the bundle of the carbon fiber filaments is 1000 or more, preferably 1000 to 12000, further preferably 1000 to 11000, further preferably 1000 to 10000, further preferably 1000 to 8000, and particularly preferably 1000 to 3000, as the average number.
In the present invention, it is important that the carbon fiber filaments are oriented in one direction in the bundles of the carbon fiber filaments. The reinforcing material for a hydrated solidified body of the present invention has rigidity because 1000 or more carbon fiber filaments are bundled and oriented in one direction in the bundle of the carbon fiber filaments. Due to this rigidity, the carbon fiber filaments maintain the linearity when the reinforcing material is kneaded with a raw material of a hydrated solidified body such as cement, mortar, concrete, and slag with a mixer. That is, at the time of kneading, the carbon fiber filaments are not loosened and do not become cotton-like. Moreover, the carbon fiber filaments are not bent at the time of kneading or at the time of casting the hydrated solidified body, and the linearity of the carbon fiber filaments is maintained in the hydrated solidified body. As a result, the slump loss of the slurry of cement, mortar, concrete, or slag can be suppressed, and casting into a mold is easy.
The upper limit of the number of the carbon fiber filaments constituting the bundle of the carbon fiber filaments is preferably 12000, and further preferably 11000. The upper limit is preferably set to 12000, because the cement, the slab, or the hydrate thereof permeates among the carbon fiber filaments at the time of kneading with the raw material of the hydrated solidified body such as the slurry of cement, mortar, concrete, or slag and casting, resulting in a hydrated solidified body reinforced with the carbon fibers, and strength is exhibited. Here, the number of the carbon fiber filaments is the average number.
The average length in the axial direction of the carbon fiber filaments of the bundles of the carbon fiber filaments is 5 to 100 mm, preferably 10 to 100 mm, and further preferably 10 to 50 mm. When the average length is less than 5 mm, the carbon fiber filaments do not exhibit a sufficient reinforcing effect. On the other hand, when the average length exceeds 100 mm, the fluidity of cement mortar, concrete, and slag is impaired, which is not preferable.
Here, the average length in the axial direction of the carbon fiber filaments of the bundles of the carbon fiber filaments is an average value obtained by randomly collecting 20 bundles of the carbon fiber filaments as samples and measuring the 20 samples.

[Carbon Fiber Filaments]

As the carbon fiber filaments, for example, polyacrylonitrile (PAN)-based carbon fibers, pitch-based carbon fibers, and rayon-based carbon fibers can be used. From the viewpoint of mechanical strength, polyacrylonitrile (PAN)-based carbon fibers are preferably used. There are many grades of PAN-based carbon fibers having different tensile strength, tensile modulus, and fiber diameter, but all the grades can be used.

The reinforcing material for a hydrated solidified body of the present invention is split along the axial direction of the carbon fiber filaments when the reinforcing material is kneaded with cement, mortar, concrete, or slag, which is the raw material of the hydrated solidified body. The number of the carbon fiber filaments constituting the bundle after splitting is preferably 1000 to 12000, further preferably 1000 to 11000, further preferably 1000 to 8000, and particularly preferably 1000 to 3000. This splitting occurs due to the friction with the hydrated solidified body raw material and the stress received from the stirring blade. Here, the number of the carbon fiber filaments constituting the bundle after splitting is an average number obtained by averaging the numbers of the carbon fiber filaments constituting the bundles after splitting.

[Resin]

The resin constituting the CFRP or the prepreg thereof used as the raw material may be any of a thermosetting resin, a thermoplastic resin, and a mixture thereof.

Examples of the thermosetting resin include an epoxy resin, an unsaturated polyester resin, a phenol resin, a vinyl ester resin, a cyanate ester resin, a urethane acrylate resin, a phenoxy resin, an alkyd resin, a urethane resin, a pre-polymerized resin of a maleimide resin and a cyanate ester resin, a bismaleimide resin, a polyimide resin and a polyisoimide resin having an acetylene terminal, and a polyimide resin having a nadic acid terminal.

Examples of the thermoplastic resin include a polypropylene resin, a polysulfone resin, a polyethersulfone resin, a polyetherketone resin, a polyetheretherketone resin, an aromatic polyamide resin, an aromatic polyester resin, an aromatic polycarbonate resin, a polyetherimide resin, a polyarylene oxide resin, a thermoplastic polyimide resin, a polyamide resin, a polyamideimide resin, a polyacetal resin, a polyphenylene oxide resin, a polyphenylene sulfide resin, a polyarylate resin, a polyacrylonitrile resin, a polyaramid resin, and a polybenzimidazole resin.

One type thereof or a mixture of two or more types thereof may be used. These resins may contain a curing agent, a curing accelerator, a colorant, and another additive.

The resin content of the raw material is, for example, 10 to 90% by weight, and preferably 20 to 70% by weight.

Here, the resin preferably contains no petroleum pitch. Petroleum pitch is generally used as a binder of a briquette or for pavement but is not suitable as a matrix resin of CFRP.

[Amorphous Carbon]

The amorphous carbon is derived from the resin contained in the CFRP or the prepreg thereof used as the raw material, which is carbonized to become amorphous carbon, and adheres to and remains on the surface of the carbon fibers. Due to the amorphous carbon, the carbon fiber filaments are bonded to each other in a state of being oriented in one direction in the bundles of the carbon fiber filaments.

In the bundles of the carbon fiber filaments, the amorphous carbon is contained at 5% by weight or more and 30% by weight or less, and preferably more than 5% by weight and 30% by weight or less, based on the total weight of the carbon fiber filaments and the amorphous carbon. When the bundles of the carbon fiber filaments contain 5 to 30% by weight of the amorphous carbon, the carbon fiber filaments are favorably bundled together and have rigidity.

As a result, during kneading with the slurry of cement, mortar, concrete, or slag, which is the raw material of the hydrated solidified body, with a mixer, the reinforcing material is split into an average number of 1000 to 12000, preferably 1000 to 11000 along the axial direction of the carbon fiber filaments, and the linearity of the carbon fiber filaments constituting the bundles of the carbon fiber filaments after splitting is maintained. Furthermore, each of the carbon fiber filaments is not loosened and does not become cotton-like even during kneading and handling for the kneading. The carbon fiber filaments are not bent at the time of kneading into the hydrated solidified body or at the time of casting the hydrated solidified body, and the linearity of the carbon fiber filaments is maintained even in the hydrated solidified body.

The amorphous carbon content can be calculated by the following equation based on the weights of the raw material before and after the thermal decomposition treatment and the amount of the carbon fibers contained in the raw material.

Amorphous carbon content (%) = (weight after thermal decomposition treatment - net carbon fiber weight in raw material)/(weight after thermal decomposition treatment) $\times$ 100

When the amount of the carbon fibers contained in the raw material before the thermal decomposition treatment is unknown in advance, the amount of the amorphous carbon can be measured by thermogravimetric differential thermal analysis (TG-DTA).

Specifically, for example, 5 mg of the raw material is used as a sample, and the temperature is raised to 565°C under the conditions of a temperature increase rate of 10°C/min and an air supply rate of 50 mL/min. The amount of the amorphous carbon remaining on the carbon fiber filaments at this time can be measured.

[Planned Split Line]

The reinforcing material for a hydrated solidified body of the present invention is naturally split along the axial direction of the carbon fiber filaments when the reinforcing material is kneaded with cement, mortar, concrete, or slag, which is the raw material of the hydrated solidified body. However, for example, when a unidirectional prepreg or CFRP obtained by laminate forming of a unidirectional prepreg is used as a raw material, the number of the carbon fiber filaments constituting the bundle after splitting depends on the kneading conditions and the CF basis weight per layer (g/m$^2$).

A planned split line may be provided for splitting along the axial direction of the carbon filaments according to the need. In a preferable aspect of the present invention, the reinforcing material for a hydrated solidified body is split along the axial direction of the carbon fiber filaments, or a planned split line is provided so that the reinforcing material is split.

The planned split line is preferably a void and/or a depression provided continuously and/or discontinuously along the axial direction of the carbon fiber filaments.

Specific examples of the planned split line include a shallow depression with which the bundle of the carbon fiber filaments does not crack, perforated discontinuous cuts, and a combination thereof. The shallow depression can be provided by scratching the bundle along the axial direction of the carbon fiber filaments with a utility knife or the like. The perforated discontinuous cuts can be provided by making discontinuous cuts with a utility knife or the like along the axial direction of the carbon fiber filaments.

Because the amount of the amorphous carbon which binds the carbon fiber filaments is small, the void and/or the depression of the planned split line may be split at the time of packaging or transportation. Therefore, in order to supplement the binding, the void and/or the depression may be filled with an organic binder to such an extent that the function of the planned split line is not impaired.

The planned split line may be provided by once splitting the bundle of the carbon fiber filaments along the axial direction of the carbon fiber filaments and then joining with an organic binder. In this case, a preferable aspect of the present invention is an aspect in which the void and/or the depression is filled with an organic binder.

Here, even when the bundles of the carbon fiber filaments are partially or entirely split, the handleability is deteriorated, but there is no problem with the reinforcing effect for cement mortar or the like.

[Organic Binder]

The organic binder may adhere to the surface of the reinforcing material for a hydrated solidified body of the present invention in a manner of coating the bundles of the carbon fiber filaments. A preferable aspect of the present invention is an aspect in which an organic binder further adheres to the surface of the reinforcing material for a hydrated solidified body. Furthermore, the void and/or the depression of the planned split line may be filled with the organic binder.

Examples of the organic binder include chloroprene rubber (CR), styrene-butadiene rubber (SBR), acrylonitrile-butadiene rubber (NBR), methyl methacrylate-butadiene rubber (MBR), and butadiene rubber (BR) as rubber latexes. Of these, styrene-butadiene rubber or an acrylic acid ester is preferable because of the excellent affinity with cement, mortar, concrete, and slag.

One type of the organic binder may be used, or two or more types thereof may be mixed and used as a mixed latex and/or a mixed emulsion.

These can be adhered to the reinforcing material for a hydrated solidified body by applying a dispersion of styrene-butadiene rubber or an emulsion of an acrylic acid ester for impregnation and drying.

An ettringite fine powder or a polyvinyl alcohol fine powder is preferably further spread and adhered to the reinforcing material for a hydrated solidified body through the organic binder.

That is, it is preferable that the organic binder is adhered to the surface of the reinforcing material for a hydrated solidified body of the present invention and that an ettringite fine powder, an inorganic fine powder, or a polyvinyl alcohol fine powder is further spread and adhered through the organic binder. Of these, the ettringite fine powder is particularly preferable because needle-like crystals grow through reaction with water and because the reinforcing effect of the reinforcing material for a hydrated solidified body is enhanced by the anchor effect in the hydrated solidified body.

The bundles of the carbon fiber filaments before the surface treatment may be subjected to separation treatment with a cyclone separator. By the separation treatment, carbon particles and fluffs at the single yarn level which fell off from the carbon fiber filaments in the thermal decomposition step and the cutting and crushing steps can be removed, and the

handleability of the reinforcing material for a hydrated solidified body is improved, which is preferable.

[Hydrated Solidified Body]

The hydrated solidified body is a hydrated solidified body of any of cement, mortar, concrete, and slag.

The hydrated solidified body of the present invention is a hydrated solidified body obtained by kneading and solidifying the reinforcing material for a hydrated solidified body described above and cement, mortar, concrete, or slag and is a hydrated solidified body which contains bundles of carbon fiber filaments after splitting derived from the reinforcing material for a hydrated solidified body in the hydrated solidified body and in which the number of the carbon fiber filaments constituting the bundle after splitting is 1000 to 12000, preferably 1000 to 11000. Here, the number of the carbon fiber filaments is the average number.

In the hydrated solidified body, the bundles of the carbon fiber filaments after splitting derived from the reinforcing material for a hydrated solidified body account for preferably 0.1 to 5% by volume of the weight of the hydrated solidified body. The reinforcing effect is small when the amount is less than 0.1% by volume, which is not preferable, while when the amount exceeds 5% by volume, the fluidity of the slurry obtained by kneading with cement, mortar, concrete, or slag decreases, which is not preferable.

In the hydrated solidified body of the present invention, the reinforcing material for the hydrated solidified body contained contains carbon fiber filaments and amorphous carbon having excellent chemical resistance. Therefore, high mechanical strength can be maintained for a long period of time, even in a high alkaline atmosphere of the cement hydrate in a case where the hydrated solidified body contains cement and in a slag cured product obtained by kneading a steel slag or a granulated blast furnace slag with kneading water containing a large amount of chloride ions or sulfate ions.

In the present invention, because the mixed amount of the reinforcing material for a hydrated solidified body is not so high, even when the residual carbon ratio is high in the bundles of the carbon fiber filaments, there is no problem in view of the mechanical characteristics or the like. In addition, the long fibers are not entangled with each other and bent, and the linearity of the carbon fibers is maintained in the cement cured product. In addition, the slump loss of the carbon fiber reinforced cement, mortar, concrete, and slag slurry is suppressed, and casting into a mold is easy.

[Production Method]

The present invention also relates to a method for producing a reinforcing material for a hydrated solidified body used as a reinforcing material for a hydrated solidified body which is characterized by subjecting a prepreg containing carbon fiber filaments and a resin and/or a formed product thereof to heat treatment to carbonize the resin to obtain a carbon fiber sheet containing the carbon fiber filaments oriented in one direction and amorphous carbon binding the carbon fiber filaments to each other and cutting and/or crushing the carbon fiber sheet to obtain a reinforcing material that is a fragment of the carbon fiber sheet.

A carbon fiber sheet having a planned split line is cut and/or crushed to obtain a reinforcing material which is a fragment of the carbon fiber sheet.

In the production method, a planned split line is preferably provided on the carbon fiber sheet before cutting and/or crushing the carbon fiber sheet. In this case, the planned split line is preferably provided along the orientation direction of the carbon fiber filaments.

[Thermal Decomposition Treatment]

In the present invention, a prepreg containing carbon fiber filaments and a resin and/or a formed product thereof are used as a raw material and are subjected to thermal decomposition treatment to carbonize the resin to obtain a carbon fiber sheet after thermal decomposition.

The thermal decomposition treatment is performed by dry distillation treatment and/or oxidation treatment, and preferably by dry distillation treatment.

The dry distillation treatment is performed by heating the raw material in a non-oxidizing atmosphere. The dry distillation treatment can be performed using, for example, a batch furnace (batch kiln). Through the thermal decomposition treatment in a non-oxidizing atmosphere, heat generation caused by thermal decomposition of the resin contained in the raw material, which is CFRP or a prepreg thereof, can be regulated, and deterioration due to oxidation of the carbon fiber filaments can be prevented.

Through the dry distillation treatment, the resin is completely thermally decomposed and turns into amorphous carbon and a combustible gas. The combustible gas is discharged to the outside of the system, and the amorphous carbon adheres to and remains on the carbon fiber filaments. The amorphous carbon has an action of binding the adjacent carbon fiber filaments to each other in an oriented state and maintaining the shape.

Examples of the non-oxidizing atmosphere include a state in which the inside of the furnace is filled with the

material to be subjected to the thermal decomposition treatment to exhaust air (oxygen contained in the air), a state in which air slightly remaining in the furnace is similarly exhausted to the outside of the furnace using a dry distillation gas generated in the early stage of operation, and a state in which air (oxygen contained in the air) is replaced with an inert gas such as nitrogen and argon.

The dry distillation treatment is performed at a temperature of, for example, 350°C or higher, preferably 450°C to 600°C, depending on the type of the resin contained in the raw material. Treatment at a lower temperature requires time for the treatment. At a high temperature, treatment can be performed in a short time, but the strength of the carbon fiber filaments is likely to decrease. The dry distillation treatment time is a time in which the decomposition of the resin completes and thus varies also with the proportion of the resin contained in the CFRP or the prepreg thereof, which is the raw material. For example, the time is one to three hours.

The oxidation treatment is heat treatment in the presence of oxygen and is performed while controlling the temperature abnormality due to rapid oxidative decomposition of the matrix resin by reducing the filling amount of the material to be subjected to the thermal decomposition treatment in the furnace and making the temperature condition mild.

In addition, in order to adjust the amount of the amorphous carbon adhered, the thermally decomposed product after the dry distillation treatment is sometimes further subjected to heat decomposition treatment in an oxidizing atmosphere.

As the raw material of the present invention, CFRP or a prepreg, which is an intermediate material for production thereof, is used. The CFRP may be a recovered product recovered after once being put into the market or may be a defective product or scrap which generates in a process. The recovered product may be either before use or after use, and a waste is also used. As the prepreg, scrap which generates in the production process of CFRP or the production process of the prepreg is mainly used.

When the raw material is a prepreg, the prepreg before shaping is in a sheet shape and thus can be subjected to the thermal decomposition treatment in this state to obtain a carbon fiber sheet after thermal decomposition in which the amorphous carbon adheres to the carbon fiber filaments.

When the raw material is not in a sheet shape but has a three-dimensional shape, the three-dimensional shape is often formed by stacking layers of a sheet-shaped prepreg at the time of producing the CFRP. Therefore, even in this case, a carbon fiber sheet after thermal decomposition can be obtained by subjecting CFRP to thermal decomposition treatment to obtain a thermally decomposed product in which the amorphous carbon adheres to the carbon fiber filaments and then separating the layers stacked as the original prepreg one by one.

When the raw material is sheet-shaped CFRP, a carbon fiber sheet after thermal decomposition can be obtained by easily separating each layer or obtained as a single layer sheet even without separation.

[Cutting·Crushing]

The carbon fiber sheet after thermal decomposition is cut and/or crushed into a predetermined length after aligning the orientation directions of the carbon fiber filaments into the same direction, and thus the reinforcing material for a hydrated solidified body of the present invention can be obtained.

Cutting can be performed using a utility knife or the like. Crushing occurs intentionally and unintentionally by the stress applied during handling.

Because the carbon fiber filaments are merely connected to each other through the residual amorphous carbon in the width direction, namely in the direction orthogonal to the fiber axis, the bundles of the carbon fiber filaments constituting the reinforcing material for a hydrated solidified body of the present invention are broken, namely crushed naturally at the time of handling, and many thereof turn into a rectangular shape.

In order to adjust the number of the carbon fiber filaments of the reinforcing material for a hydrated solidified body to a predetermined number, the reinforcing material may be cut and/or crushed along the fiber filament axis, or a planned split line may be provided in advance so that the reinforcing material is crushed into a predetermined size at the time of handling, at the time of blending into the hydrated solidified body, or at the time of kneading.

When the reinforcing material for a hydrated solidified body of the present invention is kneaded with a slurry of cement, mortar, concrete, or slag, the reinforcing material is further finely crushed along the axial direction of the fiber filaments, and the number of the carbon fiber filaments constituting each reinforcing material for a hydrated solidified body becomes 12000, preferably 11000 or less, further preferably 9000 or less, further preferably 6000 or less in the average, and further preferably 3000 or less in the average. These numbers are the average numbers.

When a prepreg is used as the raw material, the prepreg is preferably a unidirectional prepreg in which the carbon fiber filaments are oriented in one direction.

When CFRP of PAN-based high-strength carbon fibers (standard modulus yarn grade) is used as the raw material, the prepreg used for producing the CFRP is preferably a unidirectional prepreg in which the carbon fiber filaments are oriented in one direction.

When the organic binder is adhered to the bundles of the carbon fiber filaments, the organic binder can be

adhered by being applied or sprayed or by immersing the bundles in a solution or a suspension of the organic binder. Further, drying may be performed.

When an ettringite fine powder or a polyvinyl alcohol fine powder is further spread and adhered to the bundles of the carbon fiber filaments to which the organic binder is adhered, after an emulsion or an aqueous solution of the organic binder is applied to the surface of the carbon fiber filament bundles, the ettringite fine powder or the like is applied or the carbon fiber filament bundles are passed through a tank containing the ettringite fine powder or the like before the emulsion or the aqueous solution is dried, and then excess fine powder is shaken off for spreading and adhering.

Examples

Hereinafter, the present invention will be explained referring to examples. The measurement and evaluation were performed by the following methods. Moreover, CFRP laminate plates and CFRP arc-shaped cured products, which were formed products containing carbon fiber filaments and a resin, were produced by the following methods.

(1) Width, Thickness, and Average Length of Reinforcing Material for Hydrated Solidified Body

Twenty pieces of the reinforcing material for a hydrated solidified body were sampled at random, and the lengths in the axial direction of the carbon fiber filaments were measured. The average value thereof was calculated to obtain the "average length". The dimension in the direction orthogonal to the carbon fiber filament axis was measured. The maximum dimension was defined as the "width", and the dimension in the direction orthogonal to both the width direction and the filament axis direction was defined as the "thickness". When the reinforcing material was not on a flat plate, a cylinder which approximated the reinforcing material and in which the orientation direction of the carbon fibers was the height direction was used, and the major axis and the minor axis of the cross-section orthogonal to the height direction of the cylinder were measured. The average thereof was defined as the cylinder equivalent diameter.

For a reinforcing material for a hydrated solidified body in a hydrated solidified body, the hydrated solidified body was dissolved by the following method to recover the reinforcing material for a hydrated solidified body, and a calculation was carried out in the same manner as described above.

(Dissolution Method)

When the hydrated solidified body was not yet cured, the reinforcing material for a hydrated solidified body was recovered by washing out the carbon fiber filament bundles contained in the hydrated cured body by washing with water and then filtrating with a net. When the hydrated solidified body was already cured, after the hydrated solidified body was immersed and dissolved in 4N aqueous hydrochloric acid solution, the uncured hydrated solidified body was washed with water, and the reinforcing material for a hydrated solidified body was recovered in the same manner as described above.

(2) Filament Count of Carbon Fiber Filaments Constituting Reinforcing Material for Hydrated Solidified Body

Twenty pieces of the reinforcing material for a hydrated solidified body were sampled at random. The dry weights thereof and the lengths of the reinforcing material were measured, and the average values thereof were calculated. At the same time, one piece of the reinforcing material for a hydrated solidified body was sampled, and the amorphous carbon content was measured. The filament count of the carbon fiber filaments was calculated according to the following equation.

Filament count = dry weight (g) of bundle of carbon fiber filaments $\times$ {(100 - residual carbon content (%))/100} $\div$ {1/4 $\times \pi \times$ carbon fiber diameter$^2$ ($\mu$m) $\times$ length (mm) of carbon fiber filament bundle reinforcing material} $\times$ carbon fiber density (g/cm$^2$) $\div 10^9$}

Here, in this example, a material whose carbon fiber diameter and carbon fiber density were known was used, but when these values are unknown, the measurement can be made by the following methods.

The carbon fiber diameter is measured by SEM observation of the reinforcing material for a hydrated solidified body. The magnification at this time is, for example, 1000 to 10000 times. When the carbon fiber has a cross-sectional shape that is not a perfect circle, the major axis and the minor axis are measured to obtain an average value. The carbon fiber density is measured in accordance with JIS R7603 Carbon fiber-Determination of density.

(3) Amorphous Carbon Content (Residual Carbon Ratio)

The amorphous carbon content (residual carbon ratio) of the bundles of the carbon fiber filaments after thermal

decomposition treatment was calculated by the following equation. In the tables, the values are referred to as "residual carbon ratios".

Amorphous carbon content (%) = (weight (g) after thermal decomposition treatment - net carbon fiber weight (g) in raw material} $\div$ (weight (g) after thermal decomposition treatment) $\times$ 100

The net carbon fiber weight in the raw material can be obtained, for example, by accurately measuring the area of the prepreg when a prepreg having a known carbon fiber areal weight is used as the raw material.

Net carbon fiber weight (g) in raw material = carbon fiber areal weight (g/$cm^2$) of raw material $\times$ area of raw material ($cm^2$)

Here, the net carbon fiber weight in the raw material can also be calculated according to the following equation, for example, when carbon fibers having a known fineness of the carbon fiber strands are used as the raw material and when single strand of the carbon fiber strands can be separated and recovered.

Amorphous carbon content (%) = {sample weight (g) after dry distillation treatment - fineness of carbon fibers $\times$ length (mm) of carbon fibers $\div$ 1000 (mm)}/(sample weight after dry distillation treatment) $\times$ 100

(4) Adhesion Strength and CF Strength Expression Ratio

A sample for a carbon fiber reinforced mortar pull-out test was produced by the following method, and the adhesion strength and the CF strength expression ratio were measured by the following carbon fiber reinforced mortar pull-out test.

<Production of Sample for Carbon Fiber Reinforced Mortar Pull-Out Test>

Using a forced-action mixer, 100 parts by weight of ordinary portlamd cement, 100 parts by weight of No. 5 silica sand, one part by weight of naphthalenesulfonic acid-based high-performance water reducing agent (MIGHTY 150, manufactured by Kao Corporation), and 37 parts by weight of water were kneaded together to prepare a mortar slurry. The mortar was kneaded in accordance with JIS R5201 "Physical testing methods for cement", 10.4.3 "Kneading Method".

The obtained slurry was poured into a briquette-type mold according to ASTM C307 (a plastic thin plate was placed in the narrowest position of the mold in advance, and the briquette was divided into two in the test axis direction) to a half of the height, and after one sample of the reinforcing material for a hydrated solidified body was placed in such a manner that the sample was oriented to the test axis, mortar was poured into the height of the mold and cured at 20°C for four weeks. Thus, a sample for a carbon fiber reinforced mortar pull-out test was produced.

<Carbon Fiber Reinforced Mortar Pull-Out Test>

The pull-out test was performed using an autograph universal tester manufactured by SHIMADZU CORPORATION in such a manner that the loading rate was adjusted to 1 mm/min, and the pull-out strength was measured.

The adhesion strength was determined by dividing the pull-out strength of the sample for the carbon fiber reinforced mortar pull-out test by the adhesion area calculated from the width, the thickness, and the length of the carbon fiber filament bundle.

Furthermore, the CF strength expression ratio was determined by the following equation.

CF strength expression ratio (%) = pull-out strength of reinforcing material $\div$ breaking strength of bundle $\times$ 100
Breaking strength (N) of bundle = strength (MPa) of carbon fibers used in raw material prepreg $\times$ $\pi$ $\times$ {carbon fiber diameter ($\mu$m) $\div$ (2 $\times$ 1000)}$^2$ $\times$ filament count (number)

Here, the strength of the carbon fibers was measured in accordance with JIS R7606 "Carbon fibre-Determination of the tensile properties of the single-filament specimens".

(5) Flexural Strength

A sample for a carbon fiber reinforced mortar bending test was produced by the following method, and the flexural

strength was measured by the following carbon fiber reinforced mortar bending test.

<Production of Sample for Carbon Fiber Reinforced Mortar Bending Test>

Using a forced-action mixer, 100 parts by weight of ordinary portlamd cement, 100 parts by weight of No. 5 silica sand, one part by weight of naphthalenesulfonic acid-based high-performance water reducing agent (MIGHTY 150, manufactured by Kao Corporation), and 37 parts by weight of water were kneaded together to prepare a mortar slurry.

To five liters of the mortar slurry, a reinforcing material for a hydrated solidified body was added in such a manner that the net carbon fiber amount became 45 g, and the mixture was kneaded for three minutes to prepare a mortar slurry in which a reinforcing material for a hydrated solidified body was dispersed. The mortar was kneaded in accordance with JIS R5201 "Physical testing methods for cement", 10.4.3 "Kneading Method". The proportion of the carbon fibers in the slurry was 0.5% by volume.

The obtained slurry was placed in a mold of 300 mm × 200 mm × 10 mm thickness and leveled with a trowel to obtain a carbon fiber reinforced mortar plate. After curing at 20°C for four weeks in this state, a bending test sample of 40 mm width × 160 mm length × 10 mm thickness was cut out and subjected to a bending test.

<Carbon Fiber Reinforced Mortar Bending Test>

The sample obtained above was subjected to a bending test. The bending test was performed by three-point bending at room temperature using an autograph universal tester manufactured by SHIMADZU CORPORATION in accordance with JIS R5201 "Physical testing methods for cement", 10.5 "Measurement". The distance between the fulcrums was set to 10 cm, and the loading rate was adjusted to 5 kgf per second.

<Production of Sample for Carbon Fiber Reinforced Concrete Bending Test>

Using a forced-action mixer, a reinforcing material for a hydrated solidified body was added to and kneaded in 30 liters of high strength ready-mixed concrete 24-18-20N in such a manner that the net carbon fiber amount became 270 g to prepare a concrete slurry in which bundles of carbon filament fibers (a reinforcing material for a hydrated solidified body) were dispersed. The fibers were introduced, partially in accordance with JSCE-F551 Method of forming steel fiber reinforced concrete in test chamber. The proportion of the carbon fibers in the slurry was 0.5% by volume.

The obtained slurry was poured into a mold of 100 mm × 100 mm × 400 mm length and cured at 20°C for four weeks in this state to produce a sample for a concrete bending test.

<Carbon Fiber Reinforced Concrete Bending Test>

The sample obtained above was subjected to a bending test. The bending test was performed by third-point loading with an upper fulcrum distance of 10 cm and a lower fulcrum distance of 30 cm using an autograph universal tester manufactured by SHIMADZU CORPORATION in accordance with JIS A1106 "Method of test for flexural strength of concrete". The loading rate was adjusted to 8 to 10 kgf/cm$^2$ per minute.

(6) Filament Counts (for those recovered from mortar slurry and those recovered from concrete slurry)

In the sample for the carbon fiber reinforced mortar bending test and the sample for the carbon fiber reinforced concrete bending test of (5) above, the filament count was expected to be reduced because the reinforcing material for a hydrated solidified body was split in the longitudinal direction at the time of kneading with mortar or concrete, and thus the carbon fiber filament count of the reinforcing material for a hydrated solidified body dispersed in the slurry was accurately measured using the following method.

About 100 ml of the obtained slurry was taken and washed with running water, and 20 pieces of the reinforcing material for a hydrated solidified body dispersed in the mortar or the concrete were randomly recovered. The weights after drying were measured, and the filament counts of the carbon fibers were calculated according to the following equation to determine an average value.

Filament count = dry weight (g) of carbon fiber filament bundle × {(100 - residual carbon content (%))/100} ÷ {1/4 × π × carbon fiber diameter$^2$ (μm) × length (mm) of carbon fiber filament bundle reinforcing material} × carbon fiber density (g/cm$^3$) ÷ $10^9$}

Here, in the examples, when SBR, PAE, or ettringite was applied or adhered, the weights were measured by

sampling in the respective steps. The coating amount or the adhesion amount was calculated from the difference, and the above equation was corrected.

(7) Filament Counts (for those before mortar embedment, before mortar kneading, and before kneading with concrete)

Twenty pieces of the reinforcing material for a hydrated solidified body were randomly recovered. The weights after drying were measured, and the filament counts of the carbon fibers were calculated according to the following equation to determine an average value.

Filament count = dry weight (g) of carbon fiber filament bundle $\times$ {(100 - residual carbon content (%))/100} $\div$ {1/4 $\times \pi \times$ carbon fiber diameter$^2$ (μm) $\times$ length (mm) of carbon fiber filament bundle reinforcing material} $\times$ carbon fiber density (g/cm$^3$) $\div 10^9$}

Here, in the examples, when SBR, PAE, or ettringite was applied or adhered, the weights were measured by sampling in the respective steps. The coating amount or the adhesion amount was calculated from the difference, and the above equation was corrected.

(8) CFRP Laminate Plate

A CFRP laminate plate which was a formed product containing carbon fiber filaments and a resin was produced by the following method.

<Production of CFRP Laminate Plate>

A unidirectional prepreg "Tenax Q-111B0" (epoxy resin-based, carbon fibers: STS40 F13 24K 1600 Tex, carbon fiber diameter of 7 μm, carbon fiber density of 1.78 g/cm$^3$, carbon fiber areal weight in the prepreg of 147 g/m$^2$, resin content of 34% by weight) manufactured by Teijin Limited and a prepreg "Tenax Q-11120" (epoxy resin-based, carbon fibers: HTS40 E13 12K 800 Tex, carbon fiber diameter of 7 μm, carbon fiber density of 1.78 g/cm$^3$, carbon fiber areal weight in the prepreg of 270 g/m$^2$, resin content of 40% by weight manufactured by Teijin Limited were prepared.

Layers of "Q-111B0" above were stacked in such a manner that the direction of the carbon fibers in the prepreg became $(0°/90°/+45°/-45°)_{2S}$, and thus a square prepreg laminate of 300 mm $\times$ 300 mm was produced and cured using an autoclave at a temperature of 130°C at a forming pressure of 1.0 MPa over a forming time of two hours to produce a quasi-isotropic CFRP laminate plate.

A quasi-isotropic CFRP laminate plate was produced in the same manner as described above using "Tenax Q-11120" instead of "Q-111B0".

(9) CFRP Arc-Shaped Cured Product

A CFRP arc-shaped cured product which was a formed product containing carbon fiber filaments and a resin was produced by the following method.

<Production of CFRP Arc-Shaped Cured Product>

Hundred parts by weight of "Epikote 828" (trade name) manufactured by Mitsubishi Chemical Corporation, 90 parts by weight of "Kayahard MCD" manufactured by Nippon Kayaku Co., Ltd., and one part by weight of "CUREZOL" manufactured by SHIKOKU CHEMICALS CORPORATION were mixed to prepare an epoxy resin composition.

One strand of carbon fibers "Tenax HTS40 F22 12K 800Tex, carbon fiber diameter of 7 μm, carbon fiber density of 1.77 g/cm$^3$" manufactured by Teijin Limited was allowed to pass through a filament winder and impregnated with the epoxy resin composition to a resin content of 35% by weight by the kiss touch method to obtain a prepreg, and then the prepreg was wound around a cylindrical mandrel having a diameter of 350 mm. The winding angle of the carbon fibers of the prepreg was +85°, ±30°, -85°, and ±30° in this order from the inside with respect to the rotation axis of the mandrel. The carbon fiber areal weight of the prepreg wound around the mandrel was 250 g/m$^2$ for each layer.

After a heat-shrinkable tape was wound thereon, a CFRP cylindrical cured product was obtained at a temperature of 130°C over a forming time of two hours. The cylindrical cured product was cut in half with a diamond cutter in such a manner that the cutter passed through the central axis of the cylindrical cured product, and a CFRP arc-shaped cured product having an arc shape with a circular cross-section having a diameter of about 350 mm, a length of 300 mm, and a thickness of 1 mm was obtained.

[Example 1]

The CFRP laminate plate was placed in a muffle furnace, and dry distillation treatment was performed at 500°C for two hours under the condition that air was blocked. The carbon fiber sheets after thermal decomposition derived from the prepreg constituting the CFRP laminate plate after the dry distillation treatment were peeled from the CFRP laminate plate one by one to obtain carbon fiber sheets after thermal decomposition.

The carbon fiber sheets after the thermal decomposition obtained above were split along the carbon fiber filament axis in such a manner that the width of the carbon fiber sheets became 0.5 mm along the carbon fiber filament axis orientation direction. Subsequently, the resultants were cut into a length of 30 mm to obtain bundles of carbon fiber filaments oriented in one direction. The results of the carbon fiber reinforced mortar pull-out test and the carbon fiber reinforced mortar bending test using the bundles of the carbon fiber filaments as a reinforcing material for a hydrated solidified body are shown in Table 1.

[Examples 2 to 6]

Carbon fiber sheets after thermal decomposition obtained in the same manner as in Example 1 were split along the carbon fiber filament axis in such a manner that the width became 1.5 mm (Examples 2, 5, and 6), 4.0 mm (Example 3), or 5.1 mm (Example 4) and then cut into a predetermined length (30 mm in Examples 2 to 4, 15 mm in Example 5, and 40 mm in Example 6) to obtain bundles of carbon fiber filaments oriented in one direction. The results of the carbon fiber reinforced mortar pull-out test and the carbon fiber reinforced mortar bending test using the bundles as reinforcing materials for a hydrated solidified body are shown in Table 1.

[Examples 7 to 9]

Carbon fiber sheets after thermal decomposition obtained in the same manner as in Example 1 were coated with styrene-butadiene rubber (SBR) latex (NS cation flex manufactured by Nihon Kasei CO., LTD) in Example 7 or a polyacrylic acid ester (PAE) emulsion (LIPOTEX M-400 manufactured by LION SPECIALTY CHEMICALS CO., LTD.) in Example 8 as an admixture agent and dried.

In Example 9, styrene-butadiene rubber (SBR) latex (NS cation flex manufactured by Nihon Kasei CO., LTD) was applied as an admixture agent, and before the coating film was dried, an ettringite powder (Denka CSA # 20 manufactured by Denka Company Limited) was adhered as an admixture material and dried. Drying was carried out under the conditions of 120°C for two hours in both cases.

Next, the carbon fiber sheets after thermal decomposition were split along the fiber filament axis in such a manner that the width became 1.5 mm. Thereafter, the resultants were cut into a length of 30 mm in the axial direction of the carbon fiber filaments to obtain bundles of carbon fiber filaments oriented in one direction. The results of the carbon fiber reinforced mortar pull-out test and the carbon fiber reinforced mortar bending test using the bundles as reinforcing materials for a hydrated solidified body are shown in Table 1.

Here, the amorphous carbon contents, the coating amounts of the SBR or the PAE, and the adhesion amount of the ettringite in the examples were calculated from the differences in the weights of samples taken in the respective steps.

[Comparative Example 1]

Tenax carbon fibers HTS40 E13 3K 200TEX manufactured by Teijin Limited were prepared, and the sizing agent was removed using acetone. The Tenax carbon fibers were dried in a dryer at 105°C for 30 minutes and then cut into a length of 30 mm in the axial direction of the carbon fiber filaments to obtain bundles of carbon fiber filaments. The results of the carbon fiber reinforced mortar pull-out test and the carbon fiber reinforced mortar bending test using the bundles as a reinforcing material for a hydrated solidified body are shown in Table 1. Moreover, the results of the carbon fiber reinforced mortar bending test using the bundles as a reinforcing material for a hydrated solidified body are shown in Table 2.

[Comparative Example 2]

A CFRP laminate plate was produced using "Q-111B0" as a prepreg. The CFRP laminate plate was subjected to dry distillation treatment in the same manner as in Example 1 to obtain carbon fiber sheets after thermal decomposition.

The carbon fiber sheets after thermal decomposition were split into a width of 1 mm and then cut into a length of 30 mm. The obtained bundles of the carbon fiber filaments were stacked in a tray to a thickness of 1 cm, placed in a muffle furnace together with the tray, oxidized at 480°C for three hours in the presence of air and adjusted to have an amorphous carbon content of almost 0%. The results of the carbon fiber reinforced mortar pull-out test and the carbon fiber reinforced mortar bending test using the bundles as a reinforcing material for a hydrated solidified body are shown in Table 1.

Moreover, the results of the carbon fiber reinforced mortar bending test using the bundles as a reinforcing material for a hydrated solidified body are shown in Table 2.

[Table 1]

| | | Raw Material for Reinforcing Material for Hydrated Solidified Body | Production Condition of Reinforcing Material for Hydrated Solidified Body | | Quality of Reinforcing Material for Hydrated Solidified Body (Before Kneading with Mortar) | | | | | | Carbon Fiber Reinforced Mortar Pull-Out Test | Carbon Fiber Reinforced Mortar Bending Test |
|---|---|---|---|---|---|---|---|---|---|---|---|---|
| | | | Thermal Decomposition Treatment (Dry Distillation Treatment) | Thermal Decomposition Treatment (Oxidation Treatment) | Residual Carbon Ratio (%) | Width (mm) | Thickness (mm) | Average Length (mm) | Filament Count ($\times 10^3$) | Admixture Agent Admixture Material | Adhesion Strength (MPa) | Flexural Strength (MPa) |
| Ex. | 1 | Q-111B0 147 g/m$^2$, RC34% $(0°/90°/+45°/-45°)_{2s}$ | 500°C × 2 hrs | None | 18 | 0.5 | 0.15 | 30 | 1.1 | None | 2.2 | 28 |
| | 2 | Same as above | 500°C × 2 hrs | None | 18 | 1.5 | 0.15 | 30 | 3.3 | None | 2.0 | 26 |
| | 3 | Same as above | 500°C × 2 hrs | None | 18 | 4.0 | 0.15 | 30 | 8.8 | None | 1.9 | 23 |
| | 4 | Same as above | 500°C × 2 hrs | None | 18 | 5.1 | 0.15 | 30 | 11.0 | None | 1.7 | 22 |
| | 5 | Same as above | 500°C × 2 hrs | None | 18 | 1.5 | 0.15 | 15 | 3.3 | None | 2.0 | 19 |
| | 6 | Same as above | 500°C × 2 hrs | None | 18 | 1.5 | 0.15 | 40 | 3.3 | None | 2.0 | 30 |
| | 7 | Same as above | 500°C × 2 hrs | None | 18 | 1.5 | 0.15 | 30 | 3.3 | SBR | 2.6 | 29 |
| | 8 | Same as above | 500°C × 2 hrs | None | 18 | 1.5 | 0.15 | 30 | 3.3 | PAE | 2.5 | 28 |
| | 9 | Same as above | 500°C × 2 hrs | None | 18 | 1.5 | 0.15 | 30 | 3.3 | SBR+Ettrin-gite | 2.8 | 32 |
| Comp. Ex. | 1 | Desized product of HTS40 E13 3K | None | None | 0 | 1.7 | 0.2 | 30 | 2.9 | None | 1.9 | 13 |
| | 2 | Q-111B0 147 g/m$^2$, RC34% $(0°/90°/+45°/-45°)_{2s}$ | 500°C × 2 hrs | 480°C × 3 hrs | 0.2 | 1.0 | 0.15 | 30 | 2.2 | None | 2.1 | 14 |

*Ex.: Example, Comp. Ex.: Comparative Example

In the pull-out test of the reinforcing materials for a hydrated solidified body of Examples 1 to 9 and Comparative Examples 1 and 2, as the filament count of the bundles of the carbon fiber filaments increased, the adhesion area with respect to the breaking strength of the bundles decreased relatively, and the adhesion strength gradually decreased in Examples 1 to 4.

In Examples 7 to 9, the admixture agent such as SBR improved the adhesion between the carbon fiber filament reinforcing material and the cement-based matrix and contributed to the expression of strength. In particular, when ettringite was added, the physical properties were high presumably because the ettringite expanded in the matrix and thus exhibited an anchor effect for preventing the reinforcing material for a hydrated solidified body from coming off.

In Comparative Examples 1 and 2, in which the amorphous carbon content was almost 0%, because the reinforcing materials were poor in rigidity, the reinforcing materials were bent at the time of kneading with the mortar, and the flexural strengths of the carbon fiber reinforced mortars were low.

[Example 10]

A CFRP laminate plate was produced using "Q-111B0" as a prepreg. The CFRP laminate plate was subjected to dry distillation treatment in the same manner as in Example 1 to obtain carbon fiber sheets after thermal decomposition.

The carbon fiber sheets after thermal decomposition were cut into a length of 30 mm to obtain bundles of carbon fiber filaments. The results of the carbon fiber reinforced mortar bending test using the bundles as a reinforcing material for a hydrated solidified body are shown in Table 2.

[Comparative Example 3]

A CFRP laminate plate was produced using "Q-111B0" as a prepreg. The CFRP laminate plate was subjected to dry distillation treatment in the same manner as in Example 1 to obtain carbon fiber sheets after thermal decomposition. The carbon fiber sheets after thermal decomposition treatment were split along the fiber filament axis in such a manner that the width became 1.5 mm. Thereafter, the resultants were cut into a length of 30 mm to obtain bundles of carbon fiber filaments.

The bundles of the carbon fiber filaments were stacked in a tray to a thickness of 10 mm, placed in a muffle furnace together with the tray and oxidized at 480°C for two hours in the presence of air to adjust the amorphous carbon content. The results of the carbon fiber reinforced mortar bending test using the bundles as a reinforcing material for a hydrated solidified body are shown in Table 2.

[Example 11]

A CFRP laminate plate was produced using "Q-111B0" as a prepreg. The CFRP laminate plate was subjected to dry distillation treatment in the same manner as in Example 1 to obtain carbon fiber sheets after thermal decomposition.

The carbon fiber sheets after thermal decomposition were split into a width of 1.5 mm along the orientation of the carbon fiber filaments and cut into a length of 30 mm using a Guillotine cutter to obtain bundles of carbon fiber filaments. The results of the carbon fiber reinforced mortar bending test using the bundles as a reinforcing material for a hydrated solidified body are shown in Table 2.

[Example 12]

Bundles of carbon fiber filaments were obtained in the same manner as in Example 11 and then subjected to oxidation treatment at 480°C for one hour to adjust the amorphous carbon content. The results of the carbon fiber reinforced mortar bending test using the bundles as a reinforcing material for a hydrated solidified body are shown in Table 2.

[Examples 13 and 14 and Comparative Example 4]

Carbon fiber sheets after thermal decomposition were obtained in the same manner as in Example 11, then slit into a predetermined width (1.5 mm width in Example 13, 0.5 mm width in Example 14, and 1.5 mm width in Comparative Example 4) through a slitter and cut into a predetermined length (15 mm in Example 13, 30 mm in Example 14, and 4 mm in Comparative Example 4) using a Guillotine cutter to obtain bundles of carbon fiber filaments. The results of the carbon fiber reinforced mortar bending test using the bundles as reinforcing materials for a hydrated solidified body are shown in Table 2.

[Example 15]

A CFRP laminate plate was produced using "Q-11120" as a prepreg. The CFRP laminate plate was subjected to dry distillation treatment in the same manner as in Example 1 to obtain carbon fiber sheets after thermal decomposition.
The carbon fiber sheets after thermal decomposition were allowed to pass through a slitter in parallel to the axial direction of the carbon fibers to create planned slit lines having a width of 1 mm and cut into a length in the axial direction of the carbon fiber filaments of 30 mm using a Guillotine cutter to obtain bundles of carbon fiber filaments. The results of evaluation of the bundles as a reinforcing material for a hydrated solidified body are shown in Table 2.

[Example 16]

Carbon fiber sheets after thermal decomposition were obtained in the same manner as in Example 15. The carbon fiber sheets were allowed to pass through a slitter to create perforated planned split lines having a width of 1 mm and then cut into a length of 30 mm using a Guillotine cutter. The carbon fiber sheets split naturally in the width direction on the Guillotine cutter outlet side, and thus bundles of carbon fiber filaments having an average width of 38 mm were obtained. The results of the carbon fiber reinforced mortar bending test using the bundles as a reinforcing material for a hydrated solidified body are shown in Table 2.

[Example 17]

A CFRP arc-shaped cured product was produced and placed in a muffle furnace, and dry distillation treatment was performed at 500°C for two hours under the condition that air was blocked. The carbon fiber sheets after thermal decomposition derived from the prepreg constituting the CFRP arc-shaped cured product after the dry distillation treatment were peeled from the CFRP arc-shaped cured product one by one to obtain carbon fiber sheets after thermal decomposition. Thereafter, the carbon fiber sheets after thermal decomposition were reformed to have a straight plane shape.
The carbon fiber sheets after thermal decomposition were cut into a length of 30 mm using a Guillotine cutter to obtain bundles of carbon fiber filaments. The results of the carbon fiber reinforced mortar bending test using the bundles as a reinforcing material for a hydrated solidified body are shown in Table 2.

[Table 2]

| | | Raw Material for Reinforcing Material for Hydrated Solidified Body | Production Condition of Reinforcing Material for Hydrated Solidified Body | | Quality of Reinforcing Material for Hydrated Solidified Body | | | | | | | | Carbon Fiber Reinforced Mortar Bending Test |
|---|---|---|---|---|---|---|---|---|---|---|---|---|---|
| | | | | | Before Kneading with Mortar | | | | Recovery from Mortar Slurry | | | | |
| | | | Thermal Decomposition Treatment (Dry Distillation Treatment) | Thermal Decomposition Treatment (Oxidation Treatment) | Residual Carbon Ratio (%) | Width (mm) | Thickness (mm) | Planned Split Line | Width (mm) | Thickness (mm) | **Filament** Count ($\times 10^3$) | Average Length (mm) | Flexural Strength (MPa) |
| Ex. | 10 | Q-111B0 147 g/m$^2$, RC34% $(0°/90°/+45°/-45°)_{2s}$ | 500°C × 2 hrs | None | 18 | 30.0 | 0.15 | None | 4.1 | 0.15 | 9.0 | 30 | 22 |
| | 11 | Same as above | 500°C × 2 hrs | None | 18 | 1.5 | 0.15 | None | 1.5 | 0.15 | 3.3 | 30 | 26 |
| | 12 | Same as above | 500°C × 2 hrs | 480°C × 1 hr | 10 | 1.5 | 0.15 | None | 1.5 | 0.15 | 3.3 | 30 | 24 |
| | 13 | Same as above | 500°C × 2 hrs | None | 18 | 1.5 | 0.15 | None | 1.5 | 0.15 | 3.3 | 15 | 19 |
| | 14 | Same as above | 500°C × 2 hrs | None | 18 | 0.5 | 0.15 | None | 0.5 | 0.15 | 1.1 | 30 | 28 |
| | 15 | Q-11120 270g/m$^2$. RC40% $(0°/90°/+45°/-45°)_{2s}$ | 500°C × 2 hrs | None | 27 | 1.0 | 0.32 | None | 1.0 | 0.32 | 4.1 | 30 | 23 |
| | 16 | Same as above | 500°C × 2 hrs | None | 27 | 38.0 | 0.32 | With (1 mm width) | 1.0 | 0.32 | 4.1 | 30 | 23 |
| | 17 | C F R P Arc-shaped cured product | 500°C × 2 hrs | None | 6 | 28.0 | 0.25 | None | 3.3 | 0.25 | 12.2 | 30 | 20 |

(continued)

| | | Raw Material for Reinforcing Material for Hydrated Solidified Body | Production Condition of Reinforcing Material for Hydrated Solidified Body | | Quality of Reinforcing Material for Hydrated Solidified Body | | | | | | | | Carbon Fiber Reinforced Mortar Bending Test |
|---|---|---|---|---|---|---|---|---|---|---|---|---|---|
| | | | | | Before Kneading with Mortar | | | | Recovery from Mortar Slurry | | | | |
| | | | Thermal Decomposition Treatment (Dry Distillation Treatment) | Thermal Decomposition Treatment (Oxidation Treatment) | Residual Carbon Ratio (%) | Width (mm) | Thickness (mm) | Planned Split Line | Width (mm) | Thickness (mm) | **Filament** Count (×$10^3$) | Average Length (mm) | Flexural Strength (MPa) |
| Comp. Ex. | 1 | Desized product of HTS40 E13 3K | None | None | 0 | 1.7 | 0.2 | None | Amorphous (cylinder approximation 0.7 φ) | | 2.9 | 30 | 13 |
| | 2 | Q-111B0 147 g/$m^2$, RC34% $(0°/90°/^{+}45°/-45°)_2s$ | 500°C × 2 hrs | 480°C × 3 hrs | 0.2 | 1.0 | 0.15 | None | Amorphous (cylinder approximation 0.5 φ) | | 2.2 | 30 | 14 |
| | 3 | Same as above | 500°C × 2 hrs | 480°C × 2 hrs | 3 | 1.5 | 0.15 | None | 1.5 | 0.15 | 3.3 | 30 | 16 |
| | 4 | Same as above | 500°C × 2 hrs | None | 18 | 1.5 | 0.15 | None | 1.5 | 0.15 | 3.3 | 4 | 12 |

*Ex.: Example, Comp. Ex.: Comparative Example

Also in the carbon fiber reinforced mortar bending test of Examples 10 to 17 and Comparative Examples 1 to 4, the same tendency as that in the pull-out test of the reinforcing materials for a hydrated solidified body was exhibited. That is, as the filament count increased, the flexural strength gradually decreased. In Example 10, the hydrated solidified body reinforcing material having a width of 30 mm was thinned to a width of 4 to 5 mm by being kneaded together with cement mortar, and the obtained carbon fiber reinforced mortar exhibited high flexural strength. When the width of the hydrated solidified body reinforcing material was further reduced in Examples 11 to 15, higher flexural strength was exhibited.
In Comparative Examples 1 and 2, in which the amorphous carbon contents (residual carbon ratios) were 0% and 0.2%, respectively, because the reinforcing materials were poor in rigidity, the reinforcing materials were bent at the time of kneading with the mortar, and the flexural strengths of the carbon fiber reinforced mortars were low.
The longer the length of the reinforcing material, the greater the flexural strength, but it was determined to be preferable to select the length in an appropriate range because the fluidity of the slurry was impaired.

[Example 18]

A CFRP laminate plate was produced using "Q-111B0" as a prepreg. The CFRP laminate plate was subjected to dry distillation treatment in the same manner as in Example 1 to obtain carbon fiber sheets after thermal decomposition.
The obtained carbon fiber sheets after thermal decomposition were split into a width of 1.5 mm along the orientation of the carbon fiber filaments and cut into a length of 30 mm using a Guillotine cutter to obtain bundles of carbon fiber filaments. The results of the carbon fiber reinforced concrete bending test using the bundles as a reinforcing material for a hydrated solidified body are shown in Table 3.

[Example 19]

A CFRP laminate plate was produced using "Q-111B0" as a prepreg. The CFRP laminate plate was subjected to dry distillation treatment in the same manner as in Example 1 to obtain carbon fiber sheets after thermal decomposition.
Styrene-butadiene rubber (SBR) latex (NS cation flex manufactured by Nihon Kasei CO., LTD) was applied as an admixture agent to the obtained carbon fiber sheets after thermal decomposition, and an ettringite powder (Denka CSA # 20 manufactured by Denka Company Limited) was immediately adhered as an admixture material and dried. After drying, the carbon fiber sheets were split into a width of 1.5 mm by being allowed to pass through a slitter along the orientation of the carbon fiber filaments and further cut into a length of 30 mm using a Guillotine cutter to obtain bundles of carbon fiber filaments. The results of the carbon fiber reinforced concrete bending test using the bundles as a reinforcing material for a hydrated solidified body are shown in Table 3.
Here, the amorphous carbon content, the coating amount of the SBR, and the adhesion amount of the ettringite in the example were calculated from the differences in the weights of samples taken in the respective steps.

[Comparative Example 5]

A CFRP laminate plate was produced using "Q-111B0" as a prepreg. The CFRP laminate plate was subjected to dry distillation treatment in the same manner as in Comparative Example 4 and further to oxidation treatment to obtain carbon fiber sheets after thermal decomposition.
The obtained carbon fiber sheets after thermal decomposition were cut into a length of 30 mm to obtain bundles of carbon fiber filaments. The results of the carbon fiber reinforced concrete bending test using the bundles as a reinforcing material for a hydrated solidified body are shown in Table 3.

[Table 3]

| | | Raw Material for Reinforcing Material for Hydrated Solidified Body | Production Condition of Reinforcing Material for Hydrated Solidified Body | | Quality of Reinforcing Material for Hydrated Solidified Body | | | | | | | | | Bending Test of Carbon Fiber Rein-forced Concrete |
|---|---|---|---|---|---|---|---|---|---|---|---|---|---|---|
| | | | | | Before Kneading with Concrete | | | | | Recovery from Concrete Slurry | | | | |
| | | | Thermal Decomposition Treatment (Dry Distillation Treatment) | Thermal Decomposition Treatment (Oxidation Treatment) | Residual Carbon Ratio (%) | Width (mm) | Thickness (mm) | Average Length (mm) | Admixture Agent Admixture Material | Width (mm) | Thick-ness (mm) | Filament Count ($\times 10^3$) | Average Length (mm) | Flexural Strength (MPa) |
| Ex. | 18 | Q-111B0 147 g/m$^2$, RC34% $(0°/90°/+45°/-45°)_{2s}$ | 500°C × 2 hrs | None | 18 | 1.5 | 0.15 | 30 | - | 1.5 | 0.15 | 3.3 | 30 | 4.8 |
| | 19 | Same as above | 500°C × 2 hrs | None | 18 | 1.5 | 0.15 | 30 | SBR+Et-tringite | 1.5 | 0.15 | 3.3 | 30 | 5.6 |
| Comp. Ex. | 5 | Same as above | 500°C × 2 hrs | 480°C × 3 hrs | 0.2 | 1.0 | 0.15 | 30 | - | Amorphous (cylin-der approximation 0.5 φ) | | 2.2 | 30 | 3.8 |

*Ex.: Example, Comp. Ex.: Comparative Example

Industrial Applicability

The reinforcing material for a hydrated solidified body of the present invention can be used as a reinforcing material for a hydrated solidified body such as cement, mortar, concrete, and slag. The hydrated solidified body can be used, for example, as a material of a building or a civil engineering structure.

## Claims

1. A reinforcing material for a hydrated solidified body comprising bundles of carbon fiber filaments oriented in one direction, wherein the bundles comprise carbon fiber filaments and amorphous carbon which binds the carbon fiber filaments to each other, the amorphous carbon accounts for 5 to 30% by weight of the total weight of the carbon fiber filaments and the amorphous carbon, the bundles have an average length in the axial direction of the carbon fiber filaments of 5 to 100 mm, and the number of the carbon fiber filaments constituting the bundle is 1000 or more.

2. The reinforcing material for a hydrated solidified body according to claim 1, wherein the hydrated solidified body is a hydrated solidified body of any of cement, mortar, concrete, and slag.

3. The reinforcing material for a hydrated solidified body according to claim 2, wherein the reinforcing material is split along the axial direction of the carbon fiber filaments when the reinforcing material is kneaded with the cement, the mortar, the concrete, or the slag, which is the raw material of the hydrated solidified body, and the number of the carbon fiber filaments constituting the bundle after splitting becomes 1000 to 12000.

4. The reinforcing material for a hydrated solidified body according to claim 1, wherein the reinforcing material is split along the axial direction of the carbon fiber filaments, or the reinforcing material has a planned split line so that the reinforcing material is split.

5. The reinforcing material for a hydrated solidified body according to claim 4, wherein the planned split line is a void and/or a depression provided continuously and/or discontinuously along the axial direction of the carbon fiber filaments.

6. The reinforcing material for a hydrated solidified body according to claim 5, wherein the void and/or the depression is filled with an organic binder.

7. The reinforcing material for a hydrated solidified body according to claim 6, wherein an organic binder further adheres to the surface of the reinforcing material for a hydrated solidified body.

8. The reinforcing material for a hydrated solidified body according to claim 7, wherein the organic binder is styrene-butadiene rubber or an acrylic acid ester.

9. The reinforcing material for a hydrated solidified body according to claim 8, wherein an ettringite fine powder or a polyvinyl alcohol fine powder is further spread and adhered to the organic binder.

10. A hydrated solidified body obtained by kneading and solidifying the reinforcing material for a hydrated solidified body according to claim 2 and cement, mortar, concrete, or slag, wherein the hydrated solidified body comprises bundles after splitting derived from the reinforcing material for a hydrated solidified body, and the number of the carbon fiber filaments constituting the bundle after splitting is 1000 to 12000.

11. The hydrated solidified body according to claim 10, wherein the bundles after splitting derived from the reinforcing material for a hydrated solidified body account for 0.1 to 5% by volume of the weight of the hydrated solidified body.

12. A method for producing a reinforcing material for a hydrated solidified body used as a reinforcing material for a hydrated solidified body, comprising: subjecting a prepreg containing carbon fiber filaments and a resin and/or a formed product thereof to heat treatment to carbonize the resin to obtain a carbon fiber sheet containing the carbon fiber filaments oriented in one direction and amorphous carbon binding the carbon fiber filaments to each other; and cutting and/or crushing the carbon fiber sheet to obtain a reinforcing material that is a fragment of the carbon fiber sheet.

**13.** The method for producing a reinforcing material for a hydrated solidified body according to claim 12, further comprising providing a planned split line on the carbon fiber sheet.

**14.** The method for producing a reinforcing material for a hydrated solidified body according to claim 12, wherein the heat treatment is dry distillation treatment and/or oxidation treatment.

## INTERNATIONAL SEARCH REPORT

International application No. **PCT/JP2024/035718**

**A. CLASSIFICATION OF SUBJECT MATTER**

***C04B 14/38***(2006.01)i; ***C04B 28/02***(2006.01)i; ***D06M 11/44***(2006.01)i; ***D06M 11/45***(2006.01)i; ***D06M 11/74***(2006.01)i; ***D06M 15/263***(2006.01)i; ***D06M 15/333***(2006.01)i; ***D06M 15/693***(2006.01)i; *D06M 101/40*(2006.01)n

FI: C04B14/38 A; C04B28/02; D06M11/44; D06M11/45; D06M11/74; D06M15/263; D06M15/333; D06M15/693; D06M101:40

According to International Patent Classification (IPC) or to both national classification and IPC

**B. FIELDS SEARCHED**

Minimum documentation searched (classification system followed by classification symbols)

C04B14/38; C04B20/00 - 20/12; C04B28/02; D06M11/44; D06M11/45; D06M11/74; D06M15/263; D06M15/333; D06M15/693; D06M101/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 11-079804 A (SUMITOMO OSAKA CEMENT CO., LTD.) 23 March 1999 (1999-03-23) paragraphs [0008], [0010], [0027]-[0040] | 1-8, 10-11 |
| A | | 9, 12-14 |
| Y | JP 7-118440 A (TORAY INDUSTRIES, INC.) 09 May 1995 (1995-05-09) paragraphs [0004], [0006], [0011], [0013], [0015], [0031], examples 1, paragraph [0039], examples 3 | 1-8, 10-12, 14 |
| A | | 9, 13 |
| Y | JP 2021-138077 A (TORAY INDUSTRIES, INC.) 16 September 2021 (2021-09-16) paragraphs [0039], [0041], example 1 | 1-8, 10-12, 14 |
| A | | 9,13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 December 2024** | **14 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/035718**

**C. DOCUMENTS CONSIDERED TO BE RELEVANT**

| Category* | Citation of document, with indication, where appropriate, of the relevant passages | Relevant to claim No. |
|---|---|---|
| Y | JP 62-252355 A (MITSUBISHI KASEI KOGYO KK) 04 November 1987 (1987-11-04) p. 2, upper left column, p. 3, upper right column to lower left column | 7-8 |
| A | JP 2005-015253 A (DU PONT-TORAY CO., LTD.) 20 January 2005 (2005-01-20) entire text, all drawings | 1-14 |
| A | JP 2008-222516 A (TORAY INDUSTRIES, INC.) 25 September 2008 (2008-09-25) entire text, all drawings | 1-14 |
| A | JP 62-030008 A (MITSUBISHI KASEI KOGYO KK) 09 February 1987 (1987-02-09) entire text, all drawings | 1-14 |

Form PCT/ISA/210 (second sheet) (July 2022)

**INTERNATIONAL SEARCH REPORT**
**Information on patent family members**

International application No.
**PCT/JP2024/035718**

| Patent document cited in search report | Publication date (day/month/year) | Patent family member(s) | Publication date (day/month/year) |
|---|---|---|---|
| JP 11-079804 A | 23 March 1999 | (Family: none) | |
| JP 7-118440 A | 09 May 1995 | (Family: none) | |
| JP 2021-138077 A | 16 September 2021 | (Family: none) | |
| JP 62-252355 A | 04 November 1987 | (Family: none) | |
| JP 2005-015253 A | 20 January 2005 | (Family: none) | |
| JP 2008-222516 A | 25 September 2008 | (Family: none) | |
| JP 62-030008 A | 09 February 1987 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07118440 A
- JP H07033904 A
- JP 2008222516 A